# EUROPEAN PATENT APPLICATION

(11) **EP 1 088 484 A1**
(43) Date of publication of application: **04.04.2001**
(21) Application number: 00121107.7
(22) Date of filing: 28.09.2000
(51) Int. Cl.: A23L 1/212, A23L 1/015, A23L 1/221, C05D 9/02

(54) **Composition based on a dehydrated vegetable comprising a chelate for deodorizing sulfur food and method for preparing same**

(30) Priority: 29.09.1999 JP 27720399
(71) Applicant: Takeda, Iwao, Kamiina-gun, Nagano 399-4601 (JP); Tamiya, Hiroshi, Kawagoe-shi, Saitama 350-1101 (JP); Harada, Kaori, Kamiina-gun, Nagano 399-0424 (JP)
(72) Inventor: Takeda, Iwao, Kamiina-gun, Nagano 399-4601 (JP); Tamiya, Hiroshi, Kawagoe-shi, Saitama 350-1101 (JP); Harada, Kaori, Kamiina-gun, Nagano 399-0424 (JP)
(74) Representative: Bauer, Friedrich

(57) **Abstract**

The deodorant for sulfur food is provided which comprises dehydrated vegetable which contains a chelate. The dehydrated vegetable is processed into powder and added to the sulfur food to deodorize the sulfur components in the food. The sulfur components in the food chemically bond to chelate compounds contained in the vegetable to form an odorless inclusion compound together with amino acid mixture in the food.

## Description

### Technical Field

The present invention relates to a deodorant for sulfur food such as garlic or onion and method for preparing the deodorant made from vegetable cultivated by a fertilizer with a chelate element.

### Background Art

Garlic has many excellent medical effects of such as activating kidney, decreasing blood pressure, preventing arteriosclerosis and feeling of cold, recovering fatigue, promoting metabolism, healing anorexia, generating tonic impact and the like, however, it smells terrible due to inclusion of sulfur components in garlic. In fact, upon cutting garlic, an enzyme "alliinase" acts on "aliin" as an amino acid in garlic to generate allysine (diallyl sulufite ester), a kind of allyl sulfide with pungent smell. Similar to garlic, onion, leek, chive, scallion and the like produce their pungent smell by sulfur compounds contained therein.

A known method for deodorizing pungent odor of garlic, deactivates alliinase by heating garlic or by immerging garlic in water or vinegar to dissolve alliinase therein. Also, Japanese Patent Disclosure No.5-43454 discloses a method for deodorizing bad-smelling element of alkyl sulfide by mixing essential oil of lemon, citral or octyl aldehyde with garlic products to generate a masking effect for coating alkyl sulfide with the added component. Japanese Patent Disclosure No.9-103263 shows odorless garlic deodorized by reacting sulfur element of garlic with peptide or saccharide to transform the sulfur element into a non-volatile compound. Japanese Patent Disclosure No.10-179075 demonstrates a preparation of a deodorized raw garlic by cooling raw garlic at a temperature less than 20 °C, crushing the cooled garlic to a paste, adding a food material inclusive of vitamin B1 and / or a vitamin B1 component to the paste, freeze-drying and forming the paste into powder.

However, in the first method for heating and dissolving alliinase in water or vinegar, alliinase in garlic cannot fully be deactivated so that allysine derived from alliin has a pungent odor. Also, in prior art method for coating alkyl sulfide with essential oil of lemon, citral or octyl aldehyde, the added component simply bonds to allysine without decomposition of allysine, and therefore it is considered that the remaining allysine still continues to generate bad smell.

An object of the present invention is to provide a deodorant for sulfur food and method for preparing the deodorant to inhibit pungent odor peculiar to sulfur food such as garlic. Another object of the present invention is to provide a deodorant made of vegetables cultivated with a specific fertilizer. Still another object of the invention is to provide a method for deodorizing sulfur food by mixing the deodorant vegetable.

### Disclosure of Invention

The deodorant for sulfur food according to the present invention comprises dehydrated vegetable which contains a chelate. For example, the dehydrated vegetable is processed into powder and added to the sulfur food to deodorize the sulfur components in the food. The inventors of the instant invention have found that the sulfur components in the food chemically bond to chelate compounds contained in the vegetable to form an odorless inclusion compound together with an amino acid mixture in the food. The inclusion compound is known as an inclusion complex which comprises a crystalline mixture wherein the molecules of one component are contained within the crystal lattice of another component. The method for preparing a deodorant for sulfur food according to the present invention, comprises the steps of: cultivating vegetable with a fertilizer which contains a chelate; freeze-drying the vegetable; and forming the dehydrated vegetable into powder.

### Best Mode for Carrying Out the Invention

Detailed embodiments of the deodorant and the method for preparing deodorant according to the present invention are described hereinafter.

The deodorant for sulfur food according to the present invention, comprises dehydrated vegetable which contains a chelate. The deodorant preferably is made from vegetable in the powdered form or powdered vegetable in a capsule. Garlic gives out pungent smell caused by sulfur compounds such as allysine, allyl sulfide, allyl disulfide, allyl propyl disulfide and allyl trisulfide which are produced from decomposition of sulfur amino acids by enzyme. For instance, allysine is derived by decomposition of alliin as a sulfur amino acid by alliinase as an enzyme. Similarly to garlic, onion, leek, chive, scallion also contain sulfur compounds that result in own pungent odor. Allysine and alliin are represented by the following respective formulae (I) and (II):

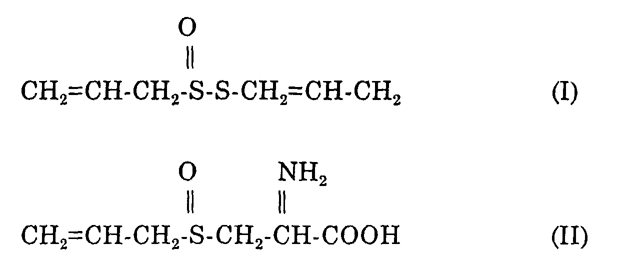

The sulfur compounds contained in other flavoring plants are shown in the following formula (III): 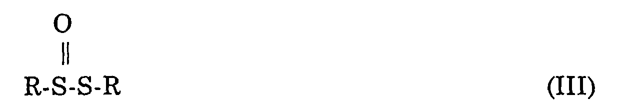 wherein R is any one selected from the groups of: -CH₂-CH₂-CH₃ (onion, Welsh onion, chive); -CH=CH-CH₃ (onion); and -CH₃ (leek, shallot).

Accordingly, the deodorant according to the present invention is effective to deodorize other sulfur plants than garlic, such as onion, Welsh onion, chive, leek, shallot and the like. Therefore, the vegetable in the invention is cultivated with fertilizer with a chelate, and may be one or more selected from a group of garlic, onion, Welsh onion, leek, chive and scallion.

One or both of saccharic and fatty acids is added to an amino acid to prepare an acid mixture which is then reacted with a metal to provide a chelate compound as an ingredient of a fertilizer for vegetables. When the fertilizer is applied in soil, vegetables grow up absorbing the chelate compound as well as other fertile elements in soil, and the cultivated vegetables are harvested, dehydrated and formed into a powdery deodorant for sulfur food.

The compound of metal for the chelate is one or more selected from groups of sulfate, nitrate, phosphate, acetate, carbonate, silicate, borate, chloride, oxide and hydroxide. Metal of the metallic compound should be one or more selected from the groups of calcium (Ca), magnesium (Mg), manganese (Mn), zinc (Zn), copper (Cu), molybdenum (Mo), iron (Fe), aluminum (Al), nickel (Ni), cobalt (Co), titanium (Ti), gallium (Ga), selenium (Se), germanium (Ge), vanadium (V), chromium (Cr), silver (Ag), strontium (Sr), indium (In), tin (Sn), gold (Au) and zirconium (Zr) to form a central metal of the chelate compound. The particularly preferable compound of metal is a selenium compound because selenium is an element consisting of glutathione peroxidase (GPx) as an enzyme for reducing electrophillic such as active oxygen into water or alcohol so that the selenium provides an active center incorporated in the peptide chain to be subjected to oxidation-reduction in substrate. Accordingly, when vegetables with the fertilizer including the selenium compounds are ingested in a living body, the ingested selenium compounds will immediately generate glutathione peroxidase (GPx) to inhibit mutation, cell toxicity and carcinogenesis, not only deodorizing the smell of garlic.

The amino acid is preferably derived from waste solution of silk scouring which contains one or more of glycine, alanine, valine, arginine, lysine, aspartic acid, glutaminic acid, serine, threonine, tyrosine, methionine and cysteine. The amino acid mixture is made by adding one or both of saccharic and fatty acids to the waste solution of silk scouring. The fibroin of silk contains colloidal sericin enclosing the fibroin. The waste solution is obtained when fibroin is immerged into heated water, soap solution or enzyme solution to dissolve the colloidal selicin in the solution and extracted it to refine silk thread with only fibroin. Accordingly, the waste solution includes proteins such as fibroin and sericin of large molecular weight with many functional groups as well as amino acid such as glycine, alanine, sericin and the like. In other words, the waste solution includes many multi-dentate ligands with a plurality of coordination groups to simultaneously form two or more chelate rings when they are coupled with metal by the coordinate bond. The simultaneous generation of the multiple chelate rings promotes the chelating effect and provides stabler chelate compounds compared to generation of a single chelate ring. When the chelate is made from the waste solution of silk scouring and mixed with other constituents, the resultant fertilizer does not degrade for a long period of time. Also, advantageously the chelate can smoothly and certainly be absorbed into agricultural products, while the chelate element is hardly decomposed by microorganisms in soil.

The preferable saccharic acid may include pentaric acid and hexalic acid which may include gluconic acid. The preferable fatty acid may include a saturated fatty acid such as formic acid, acetic acid, propionic acid, lauric acid, myristic acid, palmitic acid and stearic acid, and an unsaturated fatty acid such as acrylic acid, crotonic acid, oleic acid, sorbic acid, linoleic acid and linolenic acid.

Preferable potassic element may include potassium chloride, potassium sulfate, Carnallite (KCl · MgCl₂ · 6H₂O), potash ores (containing KCl or K₂SO₄), bittern potassium salt (KCl (+ NaCl + MgSO₄)), plant and wood ashes (K₂CO₃ + KHCO₃), kelp ashes (KCl + K₂SO₄), cement dust (sulfate, carbonate and silicate) and blast furnace dust (carbonate and sulfate).

The preferable nitrogenous elements may include ammoniacal nitrogen such as ammonium sulfate ((NH₄)₂SO₄), ammonium chloride (NH₄Cl), ammonium nitrate (NH₄NO₃), ammonium phosphate ((NH₄)₂HPO₄, NH₄H₂PO₄), aqua ammonia (NH₄OH), ammoniated peat (organic acid ammonium salt), ammoniated calcium superphosphate (NH₄H₂PO₄ + (NH₄)₂SO₄ and the like), ammonium sulfate nitrate ((NH₄)₂SO₄ + NH₄NO₃), Ammophos ((NH₄)₂SO₄ + (NH₄)₂HPO₄), ammonium sulfate phosphate ((NH₄)₂SO₄ + (NH₄)₂HPO₄), excrement (ammonium salt) and stable manure (ammonium salt); nitrate nitrogen such as ammonium nitrate (NH₄NO₃), Chile saltpeter (NaNO₃), nitrate of lime (Ca(NO₃)₂), potassium nitrate (KNO₃), ammonium sulfate nitrate ((NH₄)₂SO₄ + NH₄NO₃), nitrochalk (NH₄NO₃ + CaCO₃) and Calurea (Ca(NO₃)₂ · ₄CO(NH₂)₂); cyanamide nitrogen such as lime nitrogen (CaCN₂); urea nitrogen such as urea (CO(NH₂)₂), and Calurea (Ca(NO₃)₂ · 4CO(NH₂)₂); amino nitrogen such as urea-formaldehyde (Uraform) (CO(NH₂)₂-HCHO condensate), oxamide (NH₂-CO-CO-NH₂), guanylurea salt ([NH₂-C(NH)-NH-CO-NH₂] · X, where X is HCl, H₂SO₄, HNO₃, H₃PO₃ and the like), guanidine salt ([NH₂-C(NH)-NH₂] · X, where X is HCl, H₂SO₄, HNO₃, H₃PO₃ and the like) and ammoniated peat (containing CO(NH₂)₂); and protein nitrogen such as fish manure (containing NH₂, NH) and soybean cake (containing NH₂, NH).

Preferable phosphorous element may contain calcium superphosphate (Ca(H₂PO₄)₂ + CaSO₄), concentrated superphosphate (Ca(H₂PO₄)₂), surpentine-superphosphate (calcium superphosphate + surpentine), fused magnesium phosphate (CaO-MgO -P₂O₅-SiO₂ glass), calcined phosphate (Ca₃(PO₄)₂-CaNaPO₄ solid solution), phosphate mixture (calcium superphosphate (concentrated superphosphate) + fused magnesium phosphate), ground phosphate rock (Ca₃(PO₄)₂), precipitated phosphate (CaHPO₄), ammonium sulfate phosphate ((NH₄)₂SO₄ + NH₄H₂PO₄), potassium sulfate ammonium phosphate ((NH₄)₂SO₄ + NH₄H₂PO₄ + K₂SO₄), ball fertilizer (ammonium sulfate + calcium superphosphate + potassium salt + peat, where the form of phosphate is Ca(H₂PO₄)₂), and compound fertilizer (Ca(H₂PO₄)₂, CaHPO₄, Ca₃(HPO₄)₂ and the like).

When the deodorant in powder is applied to flavoring vegetable, the sulfur compound contained in the flavoring vegetable is converted into an odorless inclusion compound by reaction with the chelate compounds. The inclusion compound is a kind of a molecule complex consisting of first and second compounds wherein the first compound forms a space with moleculer scale of 1-3 dimensions for subsuming the second compound. Accordingly, the smelly sulfur components are subsumed or enclosed in the chelate compounds to form the odorless inclusion compounds. As the vegetable with the absorbed chelate is mixed with the sulfur compound, the mixture contains essential nourishment such as vitamins and minerals with less odor. People can ingest sulfur food together with the powdery vegetable in capsule to prevent bad breath or halitosis.

When a living body ingests the vegetables, the chelate provides an active center incorporated in the peptide chain to be subjected to oxidation-reduction in substrate, and derives enzymes for example glutathione S-transferase (GST) molecular species and glutathione peroxidase (GPx) for detoxification. Electrophile compounds contained in the living body attack the high electronic density of other molecules by electrophilic reaction such as electrophilic substitution and electrophilic addition for covalent bond with an electron of the attacked molecule. For example, the electrophile compound has the electrophile group which may attack the high electronic density area of metal-nitrogen bond of a polymer including metal such as Si-N bond, Al-N bond and B-N bond, to separate the metal-nitrogen bond and form a new bond. The electrophile compound is generated by hydration of carcinogens which contain at least one of polynuclear aromatic hydrocarbons such as benzo pyrene, azo-compound, aromatic amine and other chemical substances to cause mutation, cell toxicity and carcinogenesis by forming a covalent bond with a nucleophillic potion of DNA or protein. The enzymes for detoxification serve as a catalyst for reduction reaction into water or alcohol of highly reactive electrophillic compound with active oxygen, hydrogen peroxide, organic peroxides.

Amino acid mixture is prepared by adding either or both of saccharic and fatty acids to amino acid and the mixture includes many functional groups such as amino and carboxy groups to easily generate the chelate with central metal. In particular, the amino acid mixture would facilitate to generate the chelate since nitrogen atoms of amino group have the strong electron donative property to promote coordinate bond with the metal as an electronic acceptor. Also, generally amino acid forms five chelate rings in bidentate coodinated complex by carboxyl and amino groups contained in one molecular amino acid when the amino acid reacts with metals into chelate. The chelate prepared by mixing amino acid and metal does not cause precipitation of metallic compounds and does not deteriorate if left for a long period of time because the chelate rings in complex have higher stability than that in simple complex, and the five rings are the stablest in the complex including chelate rings by the chelate effect. After the fertilizer is applied in soil, vegetables absorb the unchanged chelate in the fertilizer because the chelate is hardly decomposed or deteriorated by microorganisms or chemical substances in soil. When the vegetables are ingested by the living body, the chelate can generate with high yield antidotal enzymes which serve as a catalyst for reducing active oxygen.

If the amount of the metallic compound is under 0.01 part, no chelate compound will be generated. Although the amount of the metallic compound exceeds 4 parts, the fertilizer would produce its unchanged effect, but it must be required to prevent contamination of the soil by an excessive amount of the metallic compounds accumulated therein. Addition of either or both of saccharic and fatty acids to amino acid under 1 part of the total amount will generate no sufficient amount of the chelate, and the amount over 5 parts will not increase the effect of the fertilizer. The potassium element of 2 to 8 parts will be efficacious to synthesize carbohydrates and nitrogen compounds and to promote anabolism, growth of the roots, flowering and fruitage. The amount of the potassic element under 2 parts will prepare no sufficient amount of carbohydrates and nitrogen compounds. The nitrogenous fertilizer of 0.1 to 1 part will serve to promote synthesis of protein in plants, division and multiplication of cells, growth of the roots and sufficient upgrowth of the leaves and stems and to advance absorption and the anabolism of the nutrition. The amount of the nitrogenous fertilizer under 0.1 part will generate no sufficient amount of protein. The nitrogenous fertilizer of 0.1 to 1 part will promote growth of the roots and activate the germination. The amount of the phosphorous element under 0.01 part will be unable to sufficiently promote growth of the roots of agricultural products. The potassic element over 8 parts, nitrogenous element over 1 part, and phosphorous element over 2 parts will undesirably provide an unnecessarily excessive amount of the fertilizer in the soil with unchanged physiologic action of each fertilizer and the oversupply of the fertilizer may exert a possible ill effect on the soil. The pH value of the fertilizer under 6.0 will result in possibility of the soil contamination due to the excessive acidity, and the pH value over 7.5 will affect the stability of the complex.

To prepare the deodorant for sulfur food according to the present invention, the fertilizer is applied in soil which contains the chelate as an ingredient of the fertilizer with which vegetable is cultivated so that it absorbs the chelate together with other fertile elements in soil. Preferably, the fertilizer comprises on the basis of weight, 0.01 to 4 parts of the metallic compound, 1 to 5 parts of an amino acid mixture, 2 to 8 parts of a potassic element, 0.1 to 1 part of a nitrogenous element, and 0.01 to 2 parts of a phosphorous element to provide a pH value of 6.0 to 7.5 when mixed with water, wherein the amino acid mixture contains saccharic and amino acids, fatty and amino acids or saccharic, fatty and amino acids. In a preferable embodiment of the invention, the fertilizer comprises on the basis of weight, 0.03 to 2 parts of selenium trioxide as the chelate element, 0.5 to 1.5 parts of amino acid, 0.5 to 1.5 parts of pentaric acid, 0.5 to 1.5 parts of acetic acid, 3 to 5 parts of a potassic element, 0.3 to 0.8 part of a nitrogenous element, and 0.5 to 1 part of a phosphorous element, to provide a pH value of 6.3 to 7.0 when mixed with water. Then, the vegetable is harvested and freeze-dried at a temperature of for example minus 20 °C for several hours, and then processed to powder. The powdered vegetable can be mixed to sulfur food to denature the sulfur compounds in the flavoring plant to the odorless inclusion compound.

When the powdered vegetable is mixed with garlic or sulfur food, the chelate in the powdered vegetable forms the inclusion compounds for subsuming the sulfur compounds such as allysine in garlic to form the odorless inclusion compounds by coupling of the chelate and sulfur compounds. Also, the deodorant according to the present invention can be ingested into living body together with natural and inherent nourishment of the vegetable in addition to the tonic elements contained in the sulfur food for activation of kidney and prevention of arteriosclerosis. It is appreciated that the powdered vegetable increases the chance of contacting the chelate compounds with the sulfur compounds such as allysine to improve the deodorizing effect on sulfur food.

### Example

Amino acid was derived from waste solution of silk scouring, and amino, pentaric and acetic acids each 1 part were dissolved in water of 3 parts to prepare an acid solution. Separately selenium trioxide of 0.07 part was dissolved in water of 3 parts to generate a water solution which was then added to the acid solution and agitated for 60 minutes. In this case, there would be substantially no problem, if the mixture was agitated for approximately 30 minutes or longer. However, it would be desirable to agitate the mixture for 60 minutes or longer to thoroughly temper and homogenize the chelate compound. Subsequently, plant and wood ashes (K₂CO₃, KHCO₃) of 4 parts as a potassic element were added to the mixture which was agitated for 60 minutes. Also, ammonium sulfate ((NH₄)₂SO₄) of 0.5 parts as a nitrogenous element and calcium superphosphate (Ca(H₂PO₄)₂ + CaSO₄) of 1 part as a phosphorous element were added to the mixture to obtain the fertilizer containing a chelate and the pH value adjusted to 6.6. The resultant fertilizer was diluted with water to one tenth concentration, and 100 cc of the diluted fertilizer was spread around the stocks of radish sprouts (daikon sprouts) every week for two months. Two kinds of radish sprouts were cultivated with and without the fertilizer. The radish sprouts were freeze-dried and crushed into powder to obtain the deodorant according to present invention and a blank. They were added to garlic pastes and agitated to perform a comparative odor test. As a result, it has been found that the paste with the deodorant of the invention is almost deodorized with the unscented garlic, whereas the blank paste without the deodorant of the invention smells of garlic. Similar odor test results indicated that the same or equivalent effects of the deodorant according to the invention were found on onion, Welsh onion, leek, chive and scallion. As mentioned above, the present invention is very effective to inhibit and remove the bad smell from the sulfur vegetables.

## Claims

1. A deodorant for sulfur food, said deodorant comprising dehydrated vegetable which contains a chelate.

2. A deodorant for sulfur food according to claim 1, wherein said vegetable is in the powdered form.

3. A deodorant for sulfur food according to claim 2, wherein said powdered vegetable is contained in a capsule.

4. A deodorant for sulfur food according to claim 1, wherein said vegetable is one or more selected from a group of garlic, onion, leek, chive and scallion.

5. A deodorant for sulfur food according to claim 1, wherein said vegetable is cultivated with fertilizer with a chelate.

6. A deodorant for sulfur food according to claim 1, wherein metal of the metallic compound for said chelate is one or more selected from the groups of calcium, magnesium, manganese, zinc, copper, molybdenum, iron, aluminum, nickel, cobalt, titanium, gallium, selenium, germanium, vanadium, chromium, silver, strontium, indium, tin, gold and zirconium to form a central metal of the chelate.

7. A method for preparing a deodorant for sulfur food, said method comprising the steps of:
cultivating cultivated with fertilizer which contains a chelate;
freeze-drying said vegetable; and
forming said dehydrated vegetable into powder.

8. A method according to claim 6, wherein said fertilizer comprising on the basis of weight, 0.01 to 4 parts of the metallic compound, 1 to 5 parts of an amino acid mixture, 2 to 8 parts of a potassic element, 0.1 to 1 part of a nitrogenous element, and 0.01 to 2 parts of a phosphorous element to provide a pH value of 6.0 to 7.5 when mixed with water, wherein said amino acid mixture contains saccharic and amino acids, fatty and amino acids or saccharic, fatty and amino acids.

9. A method according to claim 6, wherein said powdered vegetable is mixed to sulfur food.

10. A method according to claim 6, wherein said fertilizer comprising on the basis of weight, 0.03 to 2 parts of selenium trioxide as the chelate element, 0.5 to 1.5 parts of amino acid, 0.5 to 1.5 parts of pentaric acid, 0.5 to 1.5 parts of acetic acid, 3 to 5 parts of a potassic element, 0.3 to 0.8 part of a nitrogenous element, and 0.5 to 1 part of a phosphorous element, to provide a pH value of 6.3 to 7.0 when mixed with water.

11. A method according to claim 6, wherein said vegetable is one or more selected from a group of garlic, onion, leek, chive and scallion.

12. A method according to claim 7, wherein the amino acid mixture is derived from waste solution of silk scouring
